# EUROPEAN PATENT SPECIFICATION

(11) **EP 3 917 995 B1**
(45) Date of publication and mention of the grant of the patent: **13.11.2024**
(21) Application number: 20748523.6
(22) Date of filing: 27.01.2020
(51) Int. Cl.: C08H 1/00, C08J 7/04, C09D 189/00, C09D 5/14

(54) **PROTEIN-COATED MATERIALS**
PROTEINBESCHICHTETE MATERIALIEN
MATÉRIAUX REVÊTUS DE PROTÉINES

(30) Priority: 28.01.2019 US 201962797729 P
(43) Date of publication of application: 08.12.2021
(73) Proprietor: Modern Meadow, Inc., Nutley, New Jersey 07110 (US)
(72) Inventor: CAI, Shaobo, Nutley, New Jersey 07110 (US); CROWNHART, Casey, Nutley, New Jersey 07110 (US); HANDLIN, JR., Dale Lee, Nutley, New Jersey 07110 (US)
(74) Representative: Maiwald GmbH
(86) International application number: PCT/US2020/015222
(87) International publication number: WO 2020/159877

(56) References cited:
- CN-A- 103 264 552
- CN-U- 206 034 030
- GB-A- 2 426 519
- JP-U- 3 184 405
- US-A1- 2003 134 120
- US-A1- 2006 270 037
- US-A1- 2014 193 477
- US-A1- 2016 280 960
- US-A1- 2018 230 644
- US-B1- 6 762 336
- PATEN JEFFREY A. ET AL: "Molecular Interactions between Collagen and Fibronectin: A Reciprocal Relationship that Regulates De Novo Fibrillogenesis", CHEM, vol. 5, no. 8, 1 August 2019 (2019-08-01), US, pages 2126 - 2145, XP055960177, ISSN: 2451-9294, DOI: 10.1016/j.chempr.2019.05.011

## Description

### FIELD

This present disclosure relates to protein-coated materials and methods for making them.

### BACKGROUND

Textiles are used to make shirts, pants, dresses, skirts, coats, blouses, t-shirts, sweaters, shoes, bags, furniture, blankets, curtains, wall coverings, table cloths, car seats and interiors, medical/biomedical devices, disposable hygiene products, insulation and landscaping materials, tents, sails, boat, aircraft exteriors and the like. Textiles come with a variety of different properties such as stretchability, breathability, high tear strength, elongation and elasticity, absorbency and wicking, loft and resiliency, drape, strength and abrasion resistance. There is a continuing need for fibers, yarns, threads and textiles with unique aesthetics and properties.

### BRIEF SUMMARY

Some embodiments described herein are directed to a method for forming protein-coated materials including coating a substrate selected from the group consisting of a sheet, a textile, a rope, a fiber, a strand, and a yarn with a salt solution, drying the substrate, and coating the substrate with a protein.

Some embodiments described herein are directed to a method for forming protein-coated materials including coating a substrate selected from the group consisting of a sheet, a textile, a rope, a fiber, a strand, and a yarn with a solution of a polymer that is immiscible with the protein, and subsequently coating the substrate with the protein.

### DETAILED DESCRIPTION

All methods and materials similar or equivalent to those described herein can be used in the practice or testing of embodiments described herein, with suitable methods and materials being described herein. The materials, methods, and examples are illustrative only and are not intended to be limiting, unless otherwise specified.

The indefinite articles "a," "an," and "the" include plural referents unless clearly contradicted or the context clearly dictates otherwise.

The term "comprising" is an open-ended transitional phrase. A list of elements following the transitional phrase "comprising" is a non-exclusive list, such that elements in addition to those specifically recited in the list can also be present. The phrase "consisting essentially of" limits the composition of a component to the specified materials and those that do not materially affect the basic and novel characteristic(s) of the component. The phrase "consisting of" limits the composition of a component to the specified materials and excludes any material not specified.

Where a range of numerical values comprising upper and lower values is recited herein, unless otherwise stated in specific circumstances, the range is intended to include the endpoints thereof, and all integers and fractions within the range. It is not intended that the disclosure or claims be limited to the specific values recited when defining a range. Further, when an amount, concentration, or other value or parameter is given as a range, one or more ranges, or as list of upper values and lower values, this is to be understood as specifically disclosing all ranges formed from any pair of any upper range limit or value and any lower range limit or value, regardless of whether such pairs are separately disclosed. Finally, when the term "about" is used in describing a value or an end-point of a range, the disclosure should be understood to include the specific value or end-point referred to. Whether or not a numerical value or end-point of a range recites "about," the numerical value or end-point of a range is intended to include two embodiments: one modified by "about," and one not modified by "about."

As used herein, the term "about" refers to a value that is within ± 10% of the value stated. For example, about 3 kPa can include any number between 2.7 kPa and 3.3 kPa.

As used herein, a substrate means a sheet, a textile, a rope, a fiber, a strand, or a yarn.

As used herein, a strand means a single ply yarn; one strand of fiber that is twisted into a yarn. The physical properties and dimensions of the strand can vary depending on the type of fiber. The diameter of a single ply yarn can be 0.1 mm (millimeters) or more.

As used herein, yarn means ply-yarn where two or more strands are twisted together. The yarn diameter can range from about 0.1 mm to about 40 mm, about 0.5 mm to about 35 mm, about 5 mm to about 30 mm, or about 10 mm to about 20 mm.

As used herein, thread means tightly twisted plied yarn used for sewing with a diameter ranging from about 0.1 mm to about 0.8 mm, about 0.3 mm to about 0.6 mm, or about 0.4 mm to about 0.5 mm.

As used herein, a rope is a thick cord; a cord is made by twisting ply yarns together. Some types of sewing thread and ropes are cords. Cord yarns are seldom used in apparel or interior fabrics but are used in technical fabrics such as duck and canvas. Cord yarns can be 2.5 cm or more in diameter, and can consist of strands of fiber, leather, wire, or other materials that are braided or twisted together. Creating a rope through the process of braiding or twisting is called laying. Ropes are technical items where high performance is expected. Ropes are used in a wide variety of uses including farming and agricultural operations, utility work, commercial and recreational fishing, sailing vessels, shipping, transportation, etc. The rope can have a density in a range from about 1 g/cm³ (grams per centimeter cubed) to about 7.8 g/cm³, about 2 g/cm³ to about 6 g/cm³, or about 3 g/cm³ to about 5 g/cm³.

Suitable proteins for use in embodiments described herein include, but are not limited to, collagen, gelatin, silk, and the like. In some embodiments, the protein can be a recombinant protein. As used herein, a recombinant protein means an artificially produced, and often purified, protein such as collagen, gelatin, silk, and the like.

As used herein, coating means covering a substrate with a liquid and drying, cooling, and/or curing the liquid to a solid.

As used herein, the phrase "disposed on" means that a first component (e.g., coating) is in direct contact with a second component. A first component "disposed on" a second component can be deposited, formed, placed, or otherwise applied directly onto the second component. In other words, if a first component is disposed on a second component, there are no components between the first component and the second component.

As used herein, the phrase "disposed over" means other components (e.g., coatings) may or may not be present between a first component and a second component.

As used herein "collagen" refers to the family of at least 28 distinct naturally occurring collagen types including, but not limited to collagen types I, II, III, IV, V, VI, VII, VIII, IX, X, XI, XII, XIII, XIV, XV, XVI, XVII, XVIII, XIX, and XX. The term collagen as used herein also refers to collagen prepared using recombinant techniques. The term collagen includes collagen, collagen fragments, collagen-like proteins, triple helical collagen, alpha chains, monomers, gelatin, trimers and combinations thereof. Recombinant expression of collagen and collagen-like proteins is known in the art (*see, e.g.,* Bell, EP 1232182B1, Bovine collagen and method for producing recombinant gelatin; Olsen, et al., U.S. Patent No. 6,428,978 and VanHeerde, et al., U.S. Patent No. 8,188,230, incorporated by reference herein in their entireties) Unless otherwise specified, collagen of any type, whether naturally occurring or prepared using recombinant techniques, can be used in any of the embodiments described herein. That said, in some embodiments, the composite materials described herein can be prepared using bovine Type I collagen. Collagens are characterized by a repeating triplet of amino acids, -(Gly-X-Y)n-, so that approximately one-third of the amino acid residues in collagen are glycine. X is often proline and Y is often hydroxyproline. Thus, the structure of collagen may consist of three intertwined peptide chains of differing lengths. Different animals may produce different amino acid compositions of the collagen, which may result in different properties (and differences in the resulting leather). Collagen triple helices (also called monomers or tropocollagen) may be produced from alpha-chains of about 1050 amino acids long, so that the triple helix takes the form of a rod of about approximately 300 nm long, with a diameter of approximately 1.5 nm. In the production of extracellular matrix by fibroblast skin cells, triple helix monomers may be synthesized and the monomers may self-assemble into a fibrous form. These triple helices may be held together by electrostatic interactions (including salt bridging), hydrogen bonding, Van der Waals interactions, dipole-dipole forces, polarization forces, hydrophobic interactions, and covalent bonding. Triple helices can be bound together in bundles called fibrils, and fibrils can further assemble to create fibers and fiber bundles. In some embodiments, fibrils can have a characteristic banded appearance due to the staggered overlap of collagen monomers. This banding can be called "D-banding." The bands are created by the clustering of basic and acidic amino acids, and the pattern is repeated four times in the triple helix (D-period). (*See, e.g.,* Covington, A., Tanning Chemistry: The Science of Leather (2009)) The distance between bands can be approximately 67 nm for Type 1 collagen. These bands can be detected using diffraction Transmission Electron Microscope (TEM), which can be used to access the degree of fibrillation in collagen. Fibrils and fibers typically branch and interact with each other throughout a layer of skin. Variations of the organization or crosslinking of fibrils and fibers can provide strength to a material disclosed herein. In some embodiments, protein is formed, but the entire collagen structure is not triple helical. In certain embodiments, the collagen structure can be about 10%, about 15%, about 20%, about 25%, about 30%, about 35%, about 40%, about 45%, about 50%, about 55%, about 60%, about 65%, about 70%, about 75%, about 80%, about 85%, about 90%, about 95%, about 96%, about 97%, about 98%, about 99% or 100% triple helical.

In some embodiments, the collagen can be chemically modified to promote chemical and/or physical crosslinking between the collagen fibrils. Chemical crosslinking is possible due to reactive groups such as lysine, glutamic acid, and hydroxyl groups on the collagen molecule project from collagen's rod-like fibril structure. Crosslinking that involves these reactive groups prevents the collagen molecules from sliding past each other under stress, thereby increasing the mechanical strength of the collagen fibrils. Chemical crosslinking reactions can include, for example, reactions with the ε-amino group of lysine or reaction with carboxyl groups of the collagen molecule. In some embodiments, enzymes such as transglutaminase can also be used to generate crosslinks between glutamic acid and lysine to form a stable γ-glutamyl-lysine crosslink. Inducing crosslinking between functional groups of neighboring collagen molecules is known in the art.

In some embodiments, the collagen can be crosslinked or lubricated during fibrillation. In some embodiments, the collagen can be crosslinked or lubricated after fibrillation. For example, collagen fibrils can be treated with compounds containing chromium, at least one aldehyde group, or vegetable tannins prior to network formation, during network formation, or during network gel formation.

In some embodiments, up to about 20 wt% of a crosslinking agent, based on total weight of a collagen solution can be used to crosslink collagen during fibrillation. For example, about 1 wt%, about 2 wt%, about 3 wt%, about 4 wt%, about 5 wt%, about 6 wt%, about 7 wt%, about 8 wt%, about 9 wt%, about 10 wt%, about 15 wt%, or about 20 wt%, or an amount of crosslinking agent within a range having any two of these values as endpoints, inclusive of the endpoints, can be used. In some embodiments, the amount of crosslinking agent can be in a range of about 1 wt% to about 20 wt%, about 2 wt% to about 15 wt%, about 3 wt% to about 10 wt%, about 4 wt% to about 9 wt%, about 5 wt% to about 8 wt%, or about 6 wt% to about 7 wt%. In some embodiments, the crosslinking agent can include tanning agents used for conventional leather. In some embodiments, the crosslinking agent can be covalently bound to the collagen fibrils. In some embodiments, the crosslinking agent can be non-covalently associated with the collagen fibrils.

Regardless of the type of collagen, all can be formed and stabilized through a combination of physical and chemical interactions including electrostatic interactions (including salt bridging), hydrogen bonding, Van der Waals interactions, dipole-dipole forces, polarization forces, hydrophobic interactions, and covalent bonding often catalyzed by enzymatic reactions. For Type I collagen fibrils, fibers, and fiber bundles, its complex assembly is achieved in vivo during development and is critical in providing mechanical support to the tissue while allowing for cellular motility and nutrient transport.

Various distinct collagen types have been identified in vertebrates, including bovine, ovine, porcine, chicken, and human collagens. Generally, the collagen types are numbered by Roman numerals, and the chains found in each collagen type are identified by Arabic numerals. Detailed descriptions of structure and biological functions of the various different types of naturally occurring collagens are generally available in the art; *see, e.g.,* Ayad et al. (1998) The Extracellular Matrix Facts Book, Academic Press, San Diego, CA; Burgeson, R E., and Nimmi (1992) "Collagen types: Molecular Structure and Tissue Distribution" in Clin. Orthop. 282:250-272; Kielty, C. M. et al. (1993) "The Collagen Family: Structure, Assembly And Organization In The Extracellular Matrix," Connective Tissue And Its Heritable Disorders, Molecular Genetics, And Medical Aspects, Royce, P. M. and B. Steinmann eds., Wiley-Liss, NY, pp. 103-147; and Prockop, D.J- and K.I. Kivirikko (1995) "Collagens: Molecular Biology, Diseases, and Potentials for Therapy," Annu. Rev. Biochem., 64:403-434.)

Type I collagen is the major fibrillar collagen of bone and skin, comprising approximately 80-90% of an organism's total collagen. Type I collagen is the major structural macromolecule present in the extracellular matrix of multicellular organisms and comprises approximately 20% of total protein mass. Type I collagen is a heterotrimeric molecule comprising two α1(I) chains and one α2(1) chain, encoded by the COL1A1 and COL1A2 genes, respectively. Other collagen types are less abundant than type I collagen, and exhibit different distribution patterns. For example, type II collagen is the predominant collagen in cartilage and vitreous humor, while type III collagen is found at high levels in blood vessels and to a lesser extent in skin.

Type II collagen is a homotrimeric collagen comprising three identical al(II) chains encoded by the COL2A1 gene. Purified type II collagen may be prepared from tissues by, methods known in the art, for example, by procedures described in Miller and Rhodes (1982) Methods In Enzymology 82:33-64.

Type III collagen is a major fibrillar collagen found in skin and vascular tissues. Type III collagen is a homotrimeric collagen comprising three identical α1(III) chains encoded by the COL3A1 gene. Methods for purifying type III collagen from tissues can be found in, for example, Byers et al. (1974) Biochemistry 13:5243-5248; and Miller and Rhodes, *supra.*

In certain embodiments, the collagen can be Col3 alpha. In some embodiments, the collagen can be encoded by a sequence that is about 60%, about 65%, about 70%, about 75%, about 80%, about 85%, about 90%, about 95%, or about 99% identical to a naturally occurring Col3 alpha chain sequence. In other embodiments, the collagen can be encoded by a sequence that is about 60%, about 65%, about 70%, about 75%, about 80%, about 85%, about 90%, about 95%, or about 99% identical to SEQ ID NO: 1. In particular embodiments, the collagen is encoded by SEQ ID NO: 1. Sequence identity or similarity can be determined using a similarity matrix such as BLOSUM45, BLOSUM62 or BLOSUM80 where BLOSUM45 can be used for closely related sequences, BLOSUM62 for midrange sequences, and BLOSUM80 for more distantly related sequences. Unless otherwise indicated a similarity score will be based on use of BLOSUM62. When BLASTP is used, the percent similarity is based on the BLASTP positives score and the percent sequence identity is based on the BLASTP identities score. BLASTP "Identities" shows the number and fraction of total residues in the high scoring sequence pairs which are identical; and BLASTP "Positives" shows the number and fraction of residues for which the alignment scores have positive values and which are similar to each other. Amino acid sequences having these degrees of identity or similarity or any intermediate degree of identity or similarity to the amino acid sequences disclosed herein are contemplated and encompassed by this disclosure. Typically, a representative BLASTP setting uses an Expect Threshold of 10, a Word Size of 3, BLOSUM 62 as a matrix, and Gap Penalty of 11 (Existence) and 1 (Extension) and a conditional compositional score matrix adjustment. Other common settings are known to those of ordinary skill in the art.

Type IV collagen is found in basement membranes in the form of sheets rather than fibrils. Most commonly, type IV collagen contains two α1(IV) chains and one α2(IV) chain. The particular chains comprising type IV collagen are tissue-specific. Type IV collagen may be purified using, for example, the procedures described in Furuto and Miller (1987) Methods in Enzymology, 144:41-61, Academic Press.

Type V collagen is a fibrillar collagen found in, primarily, bones, tendon, cornea, skin, and blood vessels. Type V collagen exists in both homotrimeric and heterotrimeric forms. One form of type V collagen is a heterotrimer of two α1(V) chains and one α2(V) chain. Another form of type V collagen is a heterotrimer of α1(V), α2(V), and α3(V) chains. A further form of type V collagen is a homotrimer of α1(V). Methods for isolating type V collagen from natural sources can be found, for example, in Elstow and Weiss (1983) Collagen Rel. Res. 3:181-193, and Abedin et al. (1982) Biosci. Rep. 2:493-502.

Type VI collagen has a small triple helical region and two large non-collagenous remainder portions. Type VI collagen is a heterotrimer comprising α1(VI), α2(VI), and α3(VI) chains. Type VI collagen is found in many connective tissues. Descriptions of how to purify type VI collagen from natural sources can be found, for example, in Wu et al. (1987) Biochem. J. 248:373-381, and Kielty et al. (1991) J. Cell Sci. 99:797-807.

Type VII collagen is a fibrillar collagen found in particular epithelial tissues. Type VII collagen is a homotrimeric molecule of three α1(VII) chains. Descriptions of how to purify type VII collagen from tissue can be found in, for example, Lunstrum et al. (1986) J. Biol. Chem. 261:9042-9048, and Bentz et al. (1983) Proc. Natl. Acad. Sci. USA 80:3168-3172. Type VIII collagen can be found in Descemet's membrane in the cornea. Type VIII collagen is a heterotrimer comprising two α1(VIII) chains and one α2(VIII) chain, although other chain compositions have been reported. Methods for the purification of type VIII collagen from nature can be found, for example, in Benya and Padilla (1986) J. Biol. Chem. 261:4160-4169, and Kapoor et al. (1986) Biochemistry 25:3930-3937.

Type IX collagen is a fibril-associated collagen found in cartilage and vitreous humor. Type IX collagen is a heterotrimeric molecule comprising α1(IX), α2(IX), and α3 (IX) chains. Type IX collagen has been classified as a FACIT (Fibril Associated Collagens with Interrupted Triple Helices) collagen, possessing several triple helical domains separated by non-triple helical domains. Procedures for purifying type IX collagen can be found, for example, in Duance, et al. (1984) Biochem. J. 221:885-889; Ayad et al. (1989) Biochem. J. 262:753-761; and Grant et al. (1988) The Control of Tissue Damage, Glauert, A. M., ed., Elsevier Science Publishers, Amsterdam, pp. 3-28.

Type X collagen is a homotrimeric compound of α1(X) chains. Type X collagen has been isolated from, for example, hypertrophic cartilage found in growth plates. (*See, e.g.,* Apte et al. (1992) Eur J Biochem 206 (1):217-24.)

Type XI collagen can be found in cartilaginous tissues associated with type II and type IX collagens, and in other locations in the body. Type XI collagen is a heterotrimeric molecule comprising α1(XI), α2(XI), and α3(XI) chains. Methods for purifying type XI collagen can be found, for example, in Grant *et al., supra.*

Type XII collagen is a FACIT collagen found primarily in association with type I collagen. Type XII collagen is a homotrimeric molecule comprising three α1(XII) chains. Methods for purifying type XII collagen and variants thereof can be found, for example, in Dublet et al. (1989) J. Biol. Chem. 264:13150-13156; Lunstrum et al. (1992) J. Biol. Chem. 267:20087-20092; and Watt et al. (1992) J. Biol. Chem. 267:20093-20099.

Type XIII is a non-fibrillar collagen found, for example, in skin, intestine, bone, cartilage, and striated muscle. A detailed description of type XIII collagen may be found, for example, in Juvonen et al. (1992) J. Biol. Chem. 267: 24700-24707.

Type XIV is a FACIT collagen characterized as a homotrimeric molecule comprising α1(XIV) chains. Methods for isolating type XIV collagen can be found, for example, in Aubert-Foucher et al. (1992) J. Biol. Chem. 267:15759-15764,and Watt *et al., supra.*

Type XV collagen is homologous in structure to type XVIII collagen. Information about the structure and isolation of natural type XV collagen can be found, for example, in Myers et al. (1992) Proc. Natl. Acad. Sci. USA 89: 10144-10148; Huebner et al. (1992) Genomics 14:220-224; Kivirikko et al. (1994) J. Biol. Chem. 269:4773-4779; and Muragaki, J. (1994) Biol. Chem. 264:4042-4046.

Type XVI collagen is a fibril-associated collagen, found, for example, in skin, lung fibroblast, and keratinocytes. Information on the structure of type XVI collagen and the gene encoding type XVI collagen can be found, for example, in Pan et al. (1992) Proc. Natl. Acad. Sci. USA 89:6565-6569; and Yamaguchi et al. (1992) J. Biochem. 112:856-863.

Type XVII collagen is a hemidesmosal transmembrane collagen, also known at the bullous pemphigoid antigen. Information on the structure of type XVII collagen and the gene encoding type XVII collagen can be found, for example, in Li et al. (1993) J. Biol. Chem. 268(12):8825-8834; and McGrath et al. (1995) Nat. Genet. 11(1):83-86.

Type XVIII collagen is similar in structure to type XV collagen and can be isolated from the liver. Descriptions of the structures and isolation of type XVIII collagen from natural sources can be found, for example, in Rehn and Pihlajaniemi (1994) Proc. Natl. Acad. Sci USA 91:4234-4238; Oh et al. (1994) Proc. Natl. Acad. Sci USA 91:4229-4233; Rehn et al. (1994) J. Biol. Chem. 269:13924-13935; and Oh et al. (1994) Genomics 19:494-499.

Type XIX collagen is believed to be another member of the FACIT collagen family, and has been found in mRNA isolated from rhabdomyosarcoma cells. Descriptions of the structures and isolation of type XIX collagen can be found, for example, in Inoguchi et al. (1995) J. Biochem. 117:137-146; Yoshioka et al. (1992) Genomics 13:884-886; and Myers et al., J. Biol. Chem. 289:18549-18557 (1994).

Type XX collagen is a newly found member of the FACIT collagenous family, and has been identified in chick cornea. (*See, e.g.,* Gordon et al. (1999) FASEB Journal 13:A1119; and Gordon et al. (1998), IOVS 39:S1128.)

Any type of collagen, truncated collagen, unmodified or post-translationally modified, or amino acid sequence-modified collagen that can be fibrillated and crosslinked by the methods described herein can be used to produce a collagen-containing layer (e.g., collagen/polymer matrix layer) as described herein. The degree of fibrillation of the collagen molecules can be determined via x-ray diffraction. This characterization will provide d-spacing values which will correspond to different periodic structures present (e.g., 67 nm spacing vs. amorphous). In some embodiments, the collagen can be substantially homogenous collagen, such as only Type I or Type III collagen or can contain mixtures of two or more different kinds of collagens. In embodiments, the collagen is recombinant collagen.

For example, a collagen composition can homogenously contain a single type of collagen molecule, for example 100% bovine Type I collagen or 100% Type III bovine collagen, or can contain a mixture of different kinds of collagen molecules or collagen-like molecules, such as a mixture of bovine Type I and Type III molecules. The collagen mixtures can include amounts of each of the individual collagen components in the range of about 1% to about 99%, including subranges. For example, the amounts of each of the individual collagen components within the collagen mixtures can be about 1%, about 10%, about 20%, about 30%, about 40%, about 50%, about 60%, about 70%, about 80%, about 90%, or about 99%, or within a range having any two of these values as endpoints. For example, in some embodiments, a collagen mixture can contain about 30% Type I collagen and about 70% Type III collagen. Or, in some embodiments, a collagen mixture can contain about 33.3% of Type I collagen, about 33.3% of Type II collagen, and about 33.3% of Type III collagen, where the percentage of collagen is based on the total mass of collagen in the composition or on the molecular percentages of collagen molecules.

In some embodiments, the collagen can be plant-based collagen. For example, the collagen can be a plant-based collagen made by CollPlant.

In some embodiments, a collagen solution can be fibrillated into collagen fibrils. As used herein, collagen fibrils refer to nanofibers composed of tropocollagen or tropocollagen-like structures (which have a triple helical structure). In some embodiments, triple helical collagen can be fibrillated to form nanofibrils of collagen. To induce fibrillation, the collagen can be incubated to form the fibrils for a time period in the range of about 1 minute to about 24 hours, including subranges. For example, the collagen can be incubated for about 1 minute, about 5 minutes, about 10 minutes, about 20 minutes, about 30 minutes, about 40 minutes, about 50 minutes, about 1 hour, about 2 hours, about 3 hours, about 4 hours, about 5 hours, about 6 hours, about 7 hours, about 8 hours, about 9 hours, about 10 hours, about 11 hours, about 12 hours, about 13 hours, about 14 hours, about 15 hours, about 16 hours, about 17 hours, about 18 hours, about 19 hours, about 20 hours, about 21 hours, about 22 hours, about 23 hours, or about 24 hours, or within a range having any two of these values as endpoints, inclusive of the endpoints. In some embodiments, the collagen can be incubated for about 5 minutes to about 23 hours, about 10 minutes to about 22 hours, about 20 minutes to about 21 hours, about 30 minutes to about 20 hours, about 40 minutes to about 19 hours, about 50 minutes to about 18 hours, about 1 hour to about 17 hours, about 2 hours to about 16 hours, about 3 hours to about 15 hours, about 4 hours to about 14 hours, about 5 hours to about 13 hours, about 6 hours to about 12 hours, about 7 hours to about 11 hours, or about 8 hours to about 10 hours.

In some embodiments, the collagen fibrils can have an average diameter in the range of about 1 nm (nanometer) to about 1 µm (micron, micrometer), including subranges. For example, the average diameter of the collagen fibrils can be about 1 nm, about 2 nm, about 3 nm, about 4 nm, about 5 nm, about 10 nm, about 15 nm, about 20 nm, about 30 nm, about 40 nm, about 50 nm, about 60 nm, about 70 nm, about 80 nm, about 90 nm, about 100 nm, about 200 nm, about 300 nm, about 400 nm, about 500 nm, about 600 nm, about 700 nm, about 800 nm, about 900 nm, or about 1 µm, or within a range having any two of these values as endpoints, inclusive of the endpoints. In some embodiments, the average diameter can be in a range of about 2 nm to about 900 nm, about 3 nm to about 800 nm, about 4 nm to about 700 nm, about 5 nm to about 600 nm, about 10 nm to about 500 nm, about 20 nm to about 400 nm, about 30 nm to about 300 nm, about 40 nm to about 200 nm, about 50 nm to about 100 nm, about 60 nm to about 90 nm, or about 70 nm to about 80 nm.

In some embodiments, an average length of the collagen fibrils is in the range of about 100 nm to about 1 mm (millimeter), including subranges. For example, the average length of the collagen fibrils can be about 100 nm, about 200 nm, about 300 nm, about 400 nm, about 500 nm, about 600 nm, about 700 nm, about 800 nm, about 900 nm, about 1 µm, about 5 µm, about 10 µm, about 20 µm, about 30 µm, about 40 µm, about 50 µm, about 60 µm, about 70 µm, about 80 µm, about 90 µm, about 100 µm, about 200 µm, about 300 µm, about 400 µm, about 500 µm, about 600 µm, about 700 µm, about 800 µm, about 900 µm, or about 1 mm, or within a range having any two of these values as endpoints, inclusive of the endpoints. In some embodiments, the average length can be in a range of about 200 nm to about 900 µm, about 300 nm to about 800 µm, about 400 nm to about 700 µm, about 500 nm to about 600 µm, about 600 nm to about 500 µm, about 700 nm to about 400 µm, about 800 nm to about 300 µm, about 900 nm to about 200 µm, about 1 µm to about 100 µm, about 5 µm to about 90 µm, about 10 µm to about 80 µm, about 20 µm to about 70 µm, about 30 µm to about 60 µm, or about 40 µm to about 50 µm.

In some embodiments, the collagen fibrils can exhibit a unimodal, bimodal, trimiodal, or multimodal distribution. For example, a collagen-containing layer can include two different fibril preparations, each having a different range of fibril diameters arranged around one of two different modes. Such collagen mixtures can be selected to impart additive, synergistic, or a balance of physical properties to the collagen-containing layer.

In some embodiments, the collagen fibrils form networks. For example, individual collagen fibrils can associate to exhibit a banded pattern. These banded fibrils can then associate into larger aggregates of fibrils. However, in some embodiments, the fibrillated collagen can lack a higher order structure. For example, the collagen fibrils can be unbundled and provide a strong and uniform non-anisotropic structure to layered collagen materials. In other embodiments, the collagen fibrils can be bundled or aligned into higher order structures. For example, the collagen fibrils can have an orientation index in the range of 0 to about 1.0, including subranges. For example, the orientation index of the collagen fibrils can be 0, about 0.1, about 0.2, about 0.3, about 0.4, about 0.5, about 0.6, about 0.7, about 0.8, about 0.9, or about 1.0, or within a range having any two of these values as endpoints, inclusive of the endpoints, inclusive of the endpoints. In some embodiments, the orientation index can be in a range of about 0.1 to about 0.9, about 0.2 to about 0.8, about 0.3 to about 0.4, or about 0.5 to about 0.6. An orientation index of 0 describes collagen fibrils that are perpendicular to other fibrils, and an orientation index of 1.0 describes collagen fibrils that are completely aligned.

Embodiments of the present disclosure provide materials, and methods of making materials, that have a look and feel, as well as mechanical properties, similar to natural leather. The materials can have, among other things, haptic properties, aesthetic properties, mechanical/performance properties, manufacturability properties, and/or thermal properties similar to natural leather. Mechanical/performance properties that can be similar to natural leather include, but are not limited to, tensile strength, tear strength, elongation at break, resistance to abrasion, internal cohesion, water resistance, breathability, and the ability to retain color when rubbed. Haptic properties that can be similar to natural leather include, but are not limited to, softness, rigidity, coefficient of friction, and compression modulus. Aesthetic properties that can be similar to natural leather include, but are not limited to, dyeability, embossability, aging, color, color depth, and color patterns. Manufacturing properties that can be similar to natural leather include, but are not limited to, the ability to be stitched, cut, skived, and split. Thermal properties that can be similar to natural leather include, but are not limited to, heat resistance and resistance to stiffening or softening over a significantly wide temperature range, for example 25 °C to 100 °C.

In some embodiments, materials described herein can include one or more fatliquors. Fatliquor may be incorporated into a material using a "lubricating" and "fatliquoring" process. Exemplary fatliquors include, but are not limited to, fats, oils, including biological oils such as cod oil, mineral oils, or synthetic oils such as sulfonated oils, polymers, organofunctional siloxanes, or other hydrophobic compounds or agents used for fatliquoring conventional leather, or mixtures thereof. Other fatliquors can include surfactants such as anionic surfactants, cationic surfactants, cationic polymeric surfactants, anionic polymeric surfactants, amphiphilic polymers, fatty acids, modified fatty acids, nonionic hydrophilic polymers, nonionic hydrophobic polymers, poly acrylic acids, poly methacrylic acids, acrylics, natural rubbers, synthetic rubbers, resins, amphiphilic anionic polymers and copolymers, amphiphilic cationic polymer and copolymers and mixtures thereof as well as emulsions or suspensions of these in water, alcohol, ketones, and other solvents. One or more fatliquors can be incorporated in any amount that facilitates movement of collagen fibrils, or that confers leather-like properties such as flexibility, decrease in brittleness, durability, or water resistance. In some embodiments, the fatliquor may be TRUPOSOL^{®} BEN, an acrylic acid based retanning polymer available from Trumpler.

In some embodiments, materials described herein can be tanned. Tanning can be performed in any number of well-understood ways, including by contacting a material with a vegetable tanning agent, blocked isocyanate compounds, chromium compound, aldehyde, syntan, natural resin, tanning natural oil, or modified oil. Blocked isocyanate compounds can include X-tan. Vegetable tannins can include pyrogallol- or pyrocatechin-based tannins, such as valonea, mimosa, ten, tara, oak, pinewood, sumach, quebracho, and chestnut tannins. Chromium tanning agents can include chromium salts such as chromium sulfate. Aldehyde tanning agents can include glutaraldehyde and oxazolidine compounds. Syntans can include aromatic polymers, polyacrylates, polymethacrylates, copolymers of maleic anhydride and styrene, condensation products of formaldehyde with melamine or dicyandiamide, lignins, and natural flours.

In some embodiments, after tanning, a material can be retanned. Retanning refers to post-tanning treatments. Such treatments can include tanning a second time, wetting, sammying, dehydrating, neutralization, adding a coloring agent such as a dye, fat liquoring, fixation of unbound chemicals, setting, conditioning, softening, and/or buffing.

In some embodiments, materials decried herein can be colored with a coloring agent. In some embodiments the coloring agent can be a dye, for example an acid dye, a fiber reactive dye, a direct dye, a sulfur dye, a basic dye, or a reactive dye. In some embodiments, the coloring agent can be pigment, for example a lake pigment.

A fiber reactive dye includes one or more chromophores that contain pendant groups capable of forming covalent bonds with nucleophilic sites in fibrous, cellulosic substrates in the presence of an alkaline pH and raised temperature. These dyes can achieve high wash fastness and a wide range of brilliant shades. Exemplary fiber reactive dyes, include but are not limited to, sulphatoethylsulphone (Remazol), vinyl sulphone, and acrylamido dyes. These dyes can dye protein fibers such as silk, wool and nylon by reacting with fiber nucleophiles via a Michael addition. Direct dyes are anionic dyes capable of dying cellulosic or protein fibers. In the presence of an electrolyte such as sodium chloride or sodium sulfate, near boiling point, these dyes can have an affinity to cellulose. Exemplary direct dyes include, but are not limited to, azo, stilbene, phthalocyanine, and dioxazine.

In some embodiments, the materials described herein can be, or can be made into, a medical device, for example an implantable scaffold.

Embodiments described herein can use sheets, textile, ropes, fibers, strands, and yarns that can be coated. Fibers can be natural, synthetic, or combinations thereof. Examples of natural fibers include, but are not limited to, wool, silk, cotton, bamboo, and the like. Examples of manufactured fibers include, but are not limited to, glass, polyester, rayon, acrylic, nylon, carbon fiber, glass and the like.

In some embodiments, fibers can be carded to align the fibers, processed into roving, spun into strands, and two or more strands can be plied into yarns. Yarns can be made from a single strand of fibers to any number of strands that are plied together.

A core sheath material contains a central portion (core) made from one or more materials and a surrounding portion (sheath) made from a second material. The core can be a fiber or a yarn. The sheath can be a polymer or any material that can coat the core. Examples are collagen, gelatin, silk protein, or any other polymers that can be coagulated by the pretreatment, and combinations thereof.

In some embodiments, core sheath fibers can be made by dipping or coating fibers or yarns through a polymer bath or a spinneret that extrudes a polymer solution, dispersion, paste or melt and the like. The fiber or yarn becomes a core surrounded by the sheath, which is a coating.

Substrates such as a sheet, a textile, a fiber, a strand or a yarn can be coated with a solution by spraying, dipping, stirring, extruding, or other methods known in the art. Suitable textiles can be comprised of wool, silk, cotton, bamboo, glass, polyester, rayon, acrylic, nylon, carbon, and the like, as well as combinations of any of the foregoing. Suitable textile constructions can be woven, knitted, crocheted, knotted, felted, dry-laid, wet-laid, spun-bonded, spun-lace, melt-blown, spunmelt, needlepunched and the like. Suitable sheets can be films or foams made of polymers such as acetate, nylon, mylar, polyethylene, polyurethane, vinyl, cellophane, and the like. Additionally, other substrates that can be coated are brick, metal, ceramic, plastic, glass, rubber, wood, and the like.

In some embodiments, the solution for coating the substrate can contain a material that coagulates proteins onto the substrate. Suitable materials include but are not limited to salts, polymers that are not miscible with the protein, pH adjusting agents, non-solvents for the protein (liquids that do not dissolve the protein) and the like. Suitable salts include, but are not limited to, sodium sulfate, calcium chloride, sodium chloride, and the like. Suitable pH adjusting agents include, but are not limited to, hydrochloric acid, acetic acid, citric acid, sodium hydroxide, potassium hydroxide, and the like. In some embodiments, a change in pH can bring the protein being used to coat the substrate to its isoelectric point causing the protein to coagulate. Suitable non-solvents include, but are not limited to, acetone, ethyl acetate, and the like. Additionally or alternatively, a change in temperature can be used to coagulate proteins onto the substrate. Suitable temperatures can be less than room temperature, for example less than about 25 °C, less than about 20 °C, less than about 15 °C, or less than about 10 °C. In some embodiments, the temperature can be less than any of these temperature and equal to or greater than 0 °C. For example, a collagen solution can be warmed to 40 °C, a chilled yarn (at 0 °C) can then be dipped into the warmed collagen solution, and the collagen around the chilled yarn can be cooled such that the protein coagulates onto the yarn.

In some embodiments, the substrate can be coated with a salt solution, dried and coated with a protein. In some embodiments, the salt coating can be disposed over the substrate. In some embodiments, the salt coating can be disposed on the substrate. Suitable salts, as recited above, include, but are not limited to, sodium sulfate, calcium chloride, sodium chloride, and the like.

The salt solution can be made by dissolving one or more salts in a solvent. Suitable solvents include, but are not limited to, water, ethanol/water, glycol such as propylene glycol and dipropylene glycol, glycerin, and any other solvents that can dissolve salts. Suitable salt solutions include saturated salt solutions. The concentration of the salt in a saturated solution will depend on the solvent, the salt used, and the temperature at which the salt is dissolved. The substrate can be stirred in the salt solution, removed, and dried to create a salt solution coated substrate. Suitable stirring or dipping times can range from about 10 seconds to about 10 minutes, about 10 seconds to about 1 minute, or about 1 minute to about 3 minutes, or within a range having any two of these values as endpoints, inclusive of the endpoints. Alternatively, the salt solution can be sprayed onto the substrate and dried. Suitable drying methods can include ovens, air drying, tunnel drying, and the like. Suitable drying times can range from about 10 seconds to overnight (about 16 hours) or about 10 seconds to about 3 minutes. The amount of salt coated onto the substrate can range from about 5% to about 100%, about 5% to about 30%, about 10% to about 90%, about 20% to about 80%, about 30% to about 70%, or about 40% to about 60% based on the weight of the substrate before and after coating, or within a range having any two of these values as endpoints, inclusive of the endpoints.

In some embodiments, proteins such as collagen, gelatin, silk, and the like can be dissolved or suspended in a liquid to create a protein solution. Suitable liquids include, but are not limited to, water, methanol, ethanol, acetic acid, and the like. The concentration of the protein in the solution or dispersion can range from about 1% to about 30%, about 5% to about 25%, or about 10% to about 20% based on total weight of the solution or dispersion, or within a range having any two of these values as endpoints, inclusive of the endpoints.

In some embodiments, a salt-coated substrate can be coated with the protein solution by stirring or dipping in the solution and drying the coated substrate. Suitable stirring or dipping times can range from about 10 seconds to 10 minutes, about 10 seconds to about 1 minute, or about 1 minute to about 3 minutes. Suitable drying times can range from about 10 seconds to overnight, about 10 seconds to about 3 minutes, about 30 minutes to about 6 hours, or about 1 hour to about 4 hours, or within a range having any two of these values as endpoints, inclusive of the endpoints.. In some embodiments, the protein coating can be disposed over the salt coating. In some embodiments, the protein coating can be disposed on the salt coating.

In some embodiments, the amount of protein coated onto the substrate can range from about 10% to about 300%, about 30% to about 250%, about 50% to about 200%, about 75% to about 150%, or about 100% to about 125% based on the weight of the substrate before and after coating, or within a range having any two of these values as endpoints, inclusive of the endpoints.

In some embodiments, the protein-coated substrate (for example a coated fiber) can be coated with additional layers. For example, the protein-coated substrate can be coated with additional layers for ease of processing or abrasion resistance. Additional layers can be the same protein, a different protein, or a polymeric material without a protein. Suitable polymeric materials include, but are not limited to, polyurethanes, polyacrylates, polyvinylchloride, and the like. The additional layers can contain the same protein or different protein(s) relative to the coating layer, or with respect to subsequent layers. Additional layers can number from 2 to 50, 2 to 40, 2 to 30, 2 to 25, or 2 to 10, alternative minimum values include 3, 4, 5, or 6 layers. In some embodiments, the additional layer(s) can contain no protein.

In some embodiments, the substrate can be coated with a polymer, prior to coating with a protein. In particular embodiments, the polymer is immiscible with the protein. In certain embodiments, the polymer can be applied to the substrate using a solution or suspension of the polymer. Suitable protein immiscible polymers include, but are not limited to, polyurethanes such as SANCURE^{™} 20025 and Hauthaway L2985, and other polymers that are not miscible with the protein of a protein coating. In some embodiments, the polymer coating can be disposed over the substrate. In some embodiments, the polymer coating can be disposed on the substrate.

The polymer solution or suspension can be made by dissolving, dispersing, or diluting the polymer in a solvent. Suitable solvents include, but are not limited to, water, ethanol, and the like. The concentration of the polymer in solution or suspension can range from about 1% to about 50%, about 10% to about 20%, about 15% to about 40%, or about 20% to about 30% based on total weight of the solution or suspension, , or within a range having any two of these values as endpoints, inclusive of the endpoints. The substrate can be stirred or dipped in the polymer solution or suspension and removed to create a polymer solution or suspension coated substrate. Suitable stirring or dipping times can range from about 10 seconds to about 10 minutes, about 10 seconds to about 1 minute, or about 1 minute to about 3 minutes. Alternatively, the polymer solution or suspension can be sprayed onto the substrate. The amount of polymer coated onto the substrate can range from about 10% to about 300%, about 50% to about 100%, about 30% to about 250%, about 50% to about 200%, about 75% to about 150%, or about 100% to about 125% based on the weight of the substrate before and after coating, or within a range having any two of these values as endpoints, inclusive of the endpoints.

Proteins such as those recited above including collagen, gelatin, silk, and the like can be dissolved or suspended in a liquid to create a protein solution. Suitable liquids include, but are not limited to, water, methanol, ethanol, and combinations thereof. The concentration of the protein in the solution or dispersion can range from about 1% to about 30%, about 5% to about 25%, or about 10% to about 20% based on the total weight of the solution or dispersion, or within a range having any two of these values as endpoints, inclusive of the endpoints.

In some embodiments, the polymer solution-coated substrate can be coated with the protein solution by stirring or dipping in the solution and subsequently dried. In some embodiments, the protein coating can be disposed over the polymer coating. In some embodiments, the protein coating can be disposed on the polymer coating.

Suitable stirring or dipping times can range from about 10 seconds to about 10 minutes, about 10 seconds to about 1 minute, or about 1 minute to about 3 minutes, or within a range having any two of these values as endpoints, inclusive of the endpoints. Suitable drying times can range from about 10 seconds to overnight, about 10 seconds to about 3 minutes, about 30 minutes to about 6 hours, or about 1 hour to about 4 hours, or within a range having any two of these values as endpoints, inclusive of the endpoints. The amount of protein coated onto the substrate can range from about 10% to about 300%, about 50% to about 100%, about 30% to about 250%, about 50% to about 200%, about 75% to about 150%, or about 100% to about 125% based on the weight of the substrate before and after coating, or within a range having any two of these values as endpoints, inclusive of the endpoints.

In some embodiments, a substrate can be coated with a protein coating by fibrillating a protein over the substrate. In some embodiments, a substrate can be coated with a protein coating by fibrillating a protein directly on the substrate.

In some embodiments, to promote fibrillation of a protein on a substrate, the pH of the protein solution can be raised by adding a buffer or adjusting a salt concentration of the solution. In some embodiments, the pH can be raised at a temperature below about 10 °C, for example at a temperature in a range of about 0.5 °C to about 10 °C. In some embodiments, fibrillation can be facilitated by including a nucleating agent. Salts used for fibrillation can include phosphate salts and chloride salts, such as Na₃PO₄ (trisodium phosphate), K₃PO₄ (tripotassium phosphate), KCl (potassium chloride), and NaCl (sodium chloride). Additional exemplary salts include any conjugate salt of an acid such as a sulfate, a phosphate, a chloride, an acetate, a nitrate and a citrate. The salt concentration during fibrillation can be in the range of about 10 mM to about 2M, including subranges. For example, the salt concentration can be about 10 mM, about 50 mM, about 100 mM, about 200 mM, about 300 mM, about 400 mM, about 500 mM, about 600 mM, about 700 mM, about 800 mM, about 900 mM, about 1 M, about 1.5 M, or about 2 M, or within a range having any two of these values as endpoints, inclusive of the endpoints. The acids, salt concentration, salt type, pH, temperature, and collagen concentration for a fibrillation step affects how fast fibrils are formed.

Is some embodiments, the pH of the collagen solution can be adjusted to a pH in a range of about 6 to about 10. In some embodiments, the pH of the collagen solution can be adjusted to a pH in a range of about 7 to about 8.5. In some embodiments, the pH of the collagen solution can be adjusted to a pH in a range of about 7.2 to about 7.5. In some embodiments, the pH of the collagen solution can be adjusted to a pH of about 6.5, about 7.0, or greater. In some embodiments, the pH can be adjusted to a range of about 6.8 to about 7.6, a range of about 7.0 to about 7.4, or a range of about 7.1 to about 7.3. In some embodiments, the salt concentration and pH can be simultaneously adjusted to induce or promote fibrillation. In some embodiments, the temperature is about 10 °C or below while adjusting the pH and/or adding the salt solution. In certain embodiments, the temperature is below about 10 °C, about 9 °C, about 8 °C, about 7 °C, about 6 °C, about 5 °C, about 4 °C , about 3 °C, about 2 °C, about 1 °C, or about 0 °C while adjusting the pH and/or adding the salt solution. In some embodiments, after adjusting the pH of the collagen solution to within an appropriate range, fibrillation can be conducted at a temperature in a range of between about 10 °C and about 40 °C, between about 15 °C and about 37 °C, between about 15 °C and about 25 °C, between about 20 °C and about 25 °C, or between about 15 °C and about 20 °C. In certain embodiments, the temperature is about 10 °C, about 11 °C , about 12 °C, about 13 °C, about 14 °C, about 15 °C, about 16 °C, about 17 °C, about 18 °C, about 19 °C, about 20 °C, about 21 °C , about 22 °C, about 23 °C, about 24 °C, about 25 °C, about 26 °C, about 27 °C, about 28 °C, about 29 °C, about 30 °C, about 31 °C, about 32 °C, about 33 °C, about 34 °C, about 35 °C, about 36 °C, about 37 °C, about 38 °C, about 39 °C, or about 40 °C during fibrillation.

Some embodiments described herein are directed to a protein-coated substrate, wherein the substrate is selected from the group consisting of a sheet, a textile, a rope, a fiber, a strand, and a yarn. Proteins such as collagen, gelatin, silk, and the like can be coated onto the substrate as described herein. In some embodiments, fibers can be coated with a protein as described above, then carded into slivers, and spun into yarn. In some embodiments, fibers can be processed into a yarn through these processing steps: (1) "Carding" partially aligns fibers and forms them into a thin web that's brought together as a soft, very weak rope of fibers about wrist-thick with a very light twist, called "roving." (2) The roving is then "drawn", which is a process that increases the parallelism of the fibers and thins the web into a thinner variant of roving called a "sliver". (3) The sliver is then spun into yarn.

In some embodiments, uncoated, carded slivers can be coated with the protein, then spun into yarn. In some embodiments, coated, carded slivers can be spun into yarn and the yarn is then coated with the protein. In some embodiments, uncoated yarn can be coated with the protein.

In some embodiments, a batch of fibers can be coated with a protein, another batch of the fibers can be coated with a second protein, the two batches of fibers can be carded separately into carded slivers, and then the carded slivers can be drawn together into one blended drawn sliver that is then spun into yarn. In some embodiments, one sliver(s) or potion(s) can be coated with a protein, another sliver(s) or portion(s) can be coated with a second protein, the slivers or portions can be separately spun into single yarns and then plied together in any combination, with an unlimited number of single yarns, to form a ply-yarn.

Some embodiments are directed to protein-coated yarn that is made from a substrate selected from the group consisting of protein-coated fibers and protein-coated strands. In some embodiments, protein-coated fibers and/or protein-coated yarns can be combined with uncoated fibers and/or uncoated yarns to form a composite material.

In some embodiments, a coaxial die having concentric orifices with at least one inner orifice and one outer orifice can used to coat rope, fiber, yarns, and/or threads. In such embodiments, the rope, fiber, yarn, and/or thread can pass through the inner orifice and a liquid can pass through the outer orifice. In some embodiments, a motor can be used to drive a take up wheel to pull the rope, fiber, yarn, and/or thread through the inner orifice. In some embodiments, a pump or an extruder can be used to push the liquid through the outer orifice, thereby coating the rope, fiber, yarn, and/or thread as it exits the inner orifice. Suitable pumps include, but are not limited to, gear pumps, peristaltic pumps, syringe pumps, and the like. Suitable extruders include twin-screw extruders and the like.

In some embodiments, the liquid can be a protein solution or dispersion. Proteins such as collagen, gelatin, silk, and the like can be used. The concentration of the protein in the solution or dispersion can range from about 1% to about 30%, about 5% to about 10%, about 5% to about 25%, or about 10% to about 20% based on total weight of the solution or dispersion, or within a range having any two of these values as endpoints, inclusive of the endpoints.

In some embodiments, one or more plasticizers such as glycerol, diethylene glycol, propylene glycol, dipropylene glycol, triaectin, and the like can be combined with the protein solution or dispersion. The amount of plasticizer by weight combined with the protein solution or dispersion can range from about 1% to about 100%, about 10% to about 20%, about 10% to about 90%, about 20% to about 80%, about 30% to about 70%, or about 40% to about 60%, or within a range having any two of these values as endpoints, inclusive of the endpoints.

In some embodiments, one or more crosslinkers such as poly(ethylene glycol) diglycidyl ether, gluteraldehyde, and the like can be added to the protein solution or dispersion. The amount of crosslinker by weight combined with the protein solution or dispersion can range from about 5% to about 100%, about 5% to about 20%, about 10% to about 20%, about 10% to about 90%, about 20% to about 80%, about 30% to about 70%, or about 40% to about 60%, or within a range having any two of these values as endpoints, inclusive of the endpoints.

In some embodiments, two coaxial dies can be used. The first coaxial die can be used to coat the rope, fiber, yarn, and/or thread with a first coating and the second coaxial die can be used to coat the rope, fiber, yarn, and/or thread with a second coating. In some embodiments, the first coating can be a salt solution. In some embodiments, the first coating can be a solution or suspension of a polymer that is immiscible with the protein in the second coating. The second coating can be a protein solution as described herein.

Some embodiments are directed to a sheet material including entangled protein core sheath fibers, as well as methods of entangling protein core sheath fibers to form a sheet material. A "protein core sheath fiber" is a fiber including a first core composed of one or more materials coated with a protein coating as described herein.

In some embodiments, the fibers can be entangled using hydroentanglement, which uses water jets. In some embodiments, the fibers can be air entangled, which is similar to hydroentanglement, except air is used in the place of water. In some embodiments, the fibers can be needlepunched. Needlepunching is a method for entangling fibers wherein a web of material is entangled by pushing needles having barbs sized to capture fibers, pushed down into the web and pulled back up into the web. In some embodiments, spunlacing (which is similar to hydroentanglement, using water jets to make lace like hydroentangled materials) can be used.

Some embodiments are directed to methods of forming a sheet material with a mixture of protein core sheath fibers and additional fibers. The mixture of fibers can be formed into a web, which advances through fine jets of water at high pressure directed onto the web so they penetrate deeply and hydroentangle the protein core sheath fibers and the additional fibers as described herein.

Some embodiments are directed to a sheet material including protein core sheath fibers and additional fibers wherein the protein fibers and additional fibers are entangled. Some embodiments, are directed to methods of entangling protein core sheath fibers and additional fibers to form a sheet material.

As used herein additional fibers can be made from any suitable material including, but not limited to, cellulose, wood fibers, rayon, lyocell, viscose, antimicrobial yarn, SORBTEK^{®}, nylon, polyester, elastomers such as LYCRA^{®}, spandex or elastane and other polyester-polyurethane copolymers, carbon fibers, nonwovens, natural, synthetic, recombinant proteins, composite recombinant collagen, collagen-like protein, and combinations thereof.

Some embodiments are directed to composite collagen fiber material and methods of making the same. Composite collagen fiber material as used herein means a fiber material formed of collagen and additional fiber. In some embodiments, while in solution, collagen and additional fibers are blended and then formed into a composite collagen fiber material. The additional fibers can have lengths of about 2 inch, about 1 inch, about 0.5 inch, about 0.25 inch, about 0.1 inch, or about 0.01 inch, or any length that is suitable for forming entangled webs. In some embodiments, the composite collagen fibers can be cut to any length in the range of about 0.01 inch to about 2 inches or any intermediate range defined by the values recited above as upper or lower limits.

In some embodiments, the additional fibers can have diameters ranging from about 1 µm (micron, micrometer) to about 1 mm, including about 10 µm, about 25 µm, about 50 µm, about 100 µm, about 125 µm, about 175 µm, about 220 µm, about 300 µm, about 800 µm, about 900 µm, or within a range having any two of these values as endpoints, inclusive of the endpoints.

In some embodiments, the additional fibers can be mixed with collagen fibers to form a web. The amount of collagen fibers in the web can range from about 10% to about 100% by weight based on the total weight of the web, including about 20%, about 30%, about 40%, about 50%, about 60%, about 70%, about 80%, about 90%, or within a range having any two of these values as endpoints, inclusive of the endpoints. In some embodiments, the amount of additional fibers can range from 0% to about 90%, including about 5%, about 10%, about 15%, about 20%, about 30%, about 40%, about 55%, about 65%, about 75%, about 80% by weight based on the total weight of the web, or within a range having any two of these values as endpoints, inclusive of the endpoints.

Some embodiments are directed to a sheet material including protein core sheath fibers, wherein the protein core sheath fibers are interwoven, as well as methods of making such a sheet material, wherein the method includes weaving protein core sheath fibers together to form a woven sheet material.

Some embodiments are directed to a sheet material including protein core sheath fibers and additional fibers, wherein the collagen fibers and additional fibers are interwoven, as well as methods of making such a sheet material, wherein the method includes weaving protein core sheath fibers and additional fibers together to form a woven sheet material.

Some embodiments are directed to methods of forming a sheet material from a mixture of fibers including protein core sheath fibers and additional fibers. In such embodiments, the methods can include the steps of: forming the fibers into a web and subjecting the web to an entanglement process to entangle the protein core sheath fibers with the additional fibers. The entanglement of fibers can include a method selected from hydroentanglement, air entanglement, needle punching, and spunlacing. In a certain embodiment, the entanglement can be accomplished through hydroentanglement. Hydroentanglement is a well-known binderless process of bonding fibers together. It operates through a process that entangles individual fibers within a web by the use of high-energy water jets. Fibrous webs are passed under specially designed manifold heads with closely spaced holes which direct water jets at high pressures. Suitable pressures include pressures from about 30 MPa (megapascals) to about 250 MPa, from about 30 MPa to about 50 MPa, from about 80 MPa to about 120 MPa, or from about 120 MPa to about 250 MPa. The energy imparted by these water jets moves and rearranges the fibers in the web in a multitude of directions. As the fibers escape the pressure of the water streams, they move in any direction of freedom available. In the process of moving, they entangle with one another providing significant bonding strength to the fibrous webs, without the use of chemical bonding agents.

Some embodiments are directed to methods of forming sheet material with a mixture of protein core sheath fibers and additional fibers. The mixture of fibers can be formed into a web, which advances through fine jets of water at high pressure directed onto the web so they penetrate deeply and hydroentangle the protein core sheath fibers. The formed sheet material can be similar in both chemistry and structure to the corium layer of leather.

Some embodiments are directed to methods of forming a leather-like material with a grain layer and a corium layer including providing a formed sheet material according to an embodiment as described herein, providing a concentrate of protein, applying the concentrate onto the formed sheet material, rolling the concentrate onto the formed sheet material, dewatering the material, and pressing the material in a heated press. As used herein, a concentrate means a solution containing from about 5% to about 20% of a protein based on the total weight of the solution.

In some embodiments, protein-coated fibers or yarns described herein can used to prepare a structured textile by knitting, weaving, braiding, or knotting either by themselves or with other fibers or yarns. Suitable fibers can be wool, silk, cotton, bamboo, glass, polyester, rayon, acrylic, nylon, carbon, glass and the like. Suitable yarns can be natural and manufactured yarns. For example, protein-coated fibers can be in the warp direction of the textile and silk fibers are in the weft direction of the textile.

The above description provides a manner and process of making and using embodiments described herein such that any person skilled in this art is enabled to make and use the same, this enablement being provided in particular for the subject matter of the appended claims, which make up a part of the original description.

As used herein, the phrases "selected from the group consisting of," "chosen from," and the like include mixtures of the specified materials.

Where a numerical limit or range is stated herein, the endpoints are included. Also, all values and subranges within a numerical limit or range are specifically included as if explicitly written out.

The above description is presented to enable a person skilled in the art to make and use the embodiments described herein, and is provided in the context of a particular application and its requirements. Various modifications to the preferred embodiments will be readily apparent to those skilled in the art, and the generic principles defined herein can be applied to other embodiments and applications.

The embodiments discussed herein will be further clarified in the following examples.

### Example 1

A saturated sodium sulfate solution was prepared by dissolving 30 g (grams) of anhydrous sodium sulfate into 100 mL (milliliters) de-ionized water and stirred at 500 rpm (rotations per minute) for 1 hour at room temperature (about 23 °C). Precipitation of extra sodium sulfate from the solution was removed by centrifuge. A pre-weighed silk yarn (Dharma Trading Co., tussah silk, 2-ply light, sport weight) was dipped into the saturated sodium sulfate solution with slight stirring for 5 minutes. The soaked yarn was then taken out from the salt solution. After removing excess liquid, the yarn was dried in an oven at 65 °C overnight.

A gelatin solution was made by dissolving 10 g of gelatin (animal extract, Sigma Aldrich) into 100 mL de-ionized water and stirred at 500 rpm for 1 hour, at 50 °C. The sodium sulfate pre-loaded yarn (prepared as described above) was dipped into the gelatin solution with slight stirring for 1 minute. The soaked yarn was then taken out from the gelatin solution. After removing excess liquid, the yarn was dried in an oven at 65 °C overnight, generating a coated yarn. After drying, the weight of the yarn was measured again.

A control sample was also prepared by dipping pre-weighed silk yarn (Dharma Trading Co., tussah silk, 2-ply light, sport weight) directly into the above gelatin solution without pre-treatment with saturated sodium sulfate solution. An increase of yarn weight by 55% was obtained for the control sample, while an increase of yarn weight by 300% was obtained for samples pre-treated with saturated sodium sulfate solution.

### Example 2

A polyurethane solution (SANCURE^{™} 20025 original stock emulsion (48% solids) was used as received in this study. A pre-weighed silk yarn (Dharma Trading Co., tussah silk, 2-ply light, sport weight) was dipped into the polyurethane solution with slight stirring for 5 minutes. The soaked yarn was then taken out from the polyurethane solution and the excess liquid was removed with a doctor blade. The soaked yarn was then directly used for the following gelatin coating process at wet status without any drying treatment.

A gelatin solution was made by dissolving 10 g of gelatin into 100 mL de-ionized water and stirred at 500 rpm for 1 hour at 50 °C. The soaked yarn (prepared as described above) at wet status was dipped into the gelatin solution with slight stirring for 1 minute. The soaked yarn was then taken out from the gelatin solution. After removing excess liquid, the yarn was dried in an oven at 65 °C overnight, generating a gelatin-coated yarn. After drying, the weight of the yarn was measured again.

A control sample was prepared by dipping pre-weighed silk yarn (Dharma Trading Co., tussah silk, 2-ply light, sport weight) directly into the above gelatin solution without pre-treatment with polyurethane solution. Another control sample was also prepared by dipping pre-weighed silk yarn directly into polyurethane solution without subsequently coating the yarn with the gelatin solution.

An increase of yarn weight by 55% was obtained for the gelatin-coated control sample without pre-treatment with the polyurethane solution. An increase of yarn weight by 300% was obtained for the control sample coated with only the polyurethane solution. An increase of yarn weight by 500% was obtained after combined treatment of the polyurethane solution and gelatin solution.

### Example 3

A diluted polyurethane solution was prepared by mixing 20 g SANCURE^{™} 20025 original stock emulsion with 80 mL de-ionized water. A pre-weighed silk yarn (Dharma Trading Co., tussah silk, 2-ply light, sport weight) was dipped into the diluted polyurethane solution with slight stirring for 5 minutes. The soaked yarn was then taken out from the diluted polyurethane solution and excess liquid was removed. The soaked yarn was then directly used for the following coating process at wet status without any drying treatment.

A collagen dispersion was made by dispersing 10 g of Type I bovine collagen into a mixture of 50 g glacial acetic acid with 50 mL de-ionized water and stirred at 500 rpm for 2 hours at 50°C. The soaked yarn (prepared as described above) at wet status was dipped into the collagen dispersion with slight stirring for 1 minute. The soaked yarn was then taken out from the collagen dispersion. After removing excess liquid, the yarn was dried in an oven at 65 °C overnight. After drying, the weight of the yarn was measured again.

A control sample was prepared by dipping a pre-weighed silk yarn (Dharma Trading Co., tussah silk, 2-ply light, sport weight) directly into the above collagen dispersion without the diluted polyurethane solution pretreatment. Another control sample was also prepared by dipping a pre-weighed silk yarn into the diluted polyurethane solution and then dipping the silk yarn into a mixture of 50 g glacial acetic acid with 50 mL de-ionized water that did not contain collagen.

An increase of yarn weight by 22% was obtained for the collagen dispersion-coated control sample without the diluted polyurethane solution pretreatment. An increase of yarn weight by 20% was obtained for the control sample with only the diluted polyurethane solution pretreatment. An increase of yarn weight by 60% was obtained after the combined treatments of the diluted polyurethane solution pretreatment and collagen dispersion.

### Example 4

A model-1410 coaxial spinneret, with an inside needle having an inner diameter of 0.063 inches and an outside needle having an inner diameter of 0.106 inches with a Luer-Lock connecter was purchased from Ramé-Hart Instrument Co. A 20/2 TENCEL^{™} yarn purchased from Valley Fibers Corporation was pulled through the inside needle of the coaxial spinneret, from the Luer-Lock connector end to the needle tip end, at a constant speed of 1 cm/s (centimeters per second).

A collagen coating solution was prepared by dispersing 10 g of Type I bovine collagen into 100 mL de-ionized water and stirred at 500 rpm for 2 hours at 50 °C. Plasticizer (glycerol (1 g)) was added into the collagen solution. Additionally, a crosslinker (polyethylene glycol) diglycidyl ether (1 g)) was also added into the collagen solution. A NE-300 JUST INFUSION^{™} syringe pump was used to pump the above collagen solution out of a Becton Dickinson (BD) 20 mL syringe with a Luer-Lock tip, through an inner diameter 0.125 inch polytetrafluoroethylene (PTFE) tube, into the outside needle of the coaxial spinneret by the Luer-Lock connector.

After the yarn exited the coaxial spinneret's needle tip, an array of air driers was used to evaporate the residual water content in the coated materials on the yarn. A rotating yarn winder was used to pull and wind up the coated yarn.

### Example 5

Two model -1410 coaxial spinnerets, both with an inside needle having an inner diameter of 0.063 inches and outside needle having an inner diameter of 0.106 inches with a Luer-Lock connector, were purchased from Ramé-Hart Instrument Co. A 20/2 TENCEL^{™} yarn purchased from Valley Fibers Corporation was pulled through the inside needle of the first coaxial spinneret, from the Luer-Lock connector end to the needle tip end, and entered the inside needle of the second coaxial spinneret, from the Luer-Lock connector end to the needle tip end, at a constant speed of 1 cm/s.

A diluted polyurethane solution was prepared by mixing 20 g of SANCURE^{™} 20025 original stock emulsion with 80 mL de-ionized water. A NE-300 JUST INFUSION^{™} syringe pump was used to pump the diluted polyurethane solution from a 20 mL BD syringe with a Luer-Lock tip, though a PTFE (polytetrafluoroethylene) tube with an inner diameter of 0.125 inches, into the outside needle of the first coaxial spinneret by the Luer-Lock connector.

A collagen coating solution was prepared by dispersing 10 g of Type I bovine collagen into 100 mL de-ionized water and stirred at 500 rpm for 2 hours at 50°C. Plasticizer (glycerol (1 g)) was added into the collagen solution. Additionally, a crosslinker (polyethylene glycol) diglycidyl ether (1 g)) was also added into the collagen solution. A NE-300 JUST INFUSION^{™} syringe pump was used to pump the collagen solution out of a 20 mL BD syringe with a Luer-Lock tip, though a PTFE tube with an inner diameter of 0.125 inches, into the outside needle of the second coaxial spinneret by the Luer-Lock connector.

After the yarn exited the second coaxial spinneret's needle tip, an array of air driers was used to evaporate the residual water content in the coated materials on yarn. A rotating yarn winder was used to pull and wind up the coated yarn.

### Example 6

The coated yarns of Example 1 or Example 2 are woven on a floor hand loom to create a woven textile.

### Example 7

The coated yarns of Example 1 are used as the warp yarns on a dobby loom. The coated yarns of Example 2 are used as the weft yarns on the dobby loom to weave a textile.

### Example 8

The coated yarns of Example 3 are used as the warp yarns on an industrial jacquard loom. Wool yarns are used as the weft yarns to weave a textile.

### Example 9

The coated yarns of Example 1 or Example 2 are used for weft knitting with a domestic single bed industrial knitting machine.

### Example 10

The coated yarns of Example 1 or Example 2 are used for wrap knitting with a domestic double bed industrial knitting machine.

### Example 11

The coated yarns of Example 1, 2 and 3 are used to make a knit fabric through knit-weaving, jacquard or other knitted structure techniques.

### Example 12

A saturated sodium sulfate solution was prepared by dissolving 30 g of anhydrous sodium sulfate into 100 mL de-ionized water and stirred at 500 rpm for 1 hour at room temperature. The precipitation from extra sodium sulfate in the solution was removed by centrifuge. A pre-weighed cotton woven fabric (Whaley's, cotton scrim) was dipped into the saturated sodium sulfate solution with slight stirring for 5 minutes. The soaked fabric was then taken out from the salt solution. After removing excess liquid, the fabric was dried in an oven at 65 °C for 4 hours, until completely dry, generating a sodium sulfate pre-loaded fabric.

A gelatin solution was made by dissolving 10 g of gelatin (animal extract, Sigma Aldrich) into 100 mL de-ionized water and stirred at 500 rpm for 1 hour at 50°C. The sodium sulfate pre-loaded fabric was dipped into the gelatin solution with slight stirring for 1 minute. The fabric was then taken out from the gelatin solution. After removing excess liquid, the fabric was dried in an oven at 65 °C overnight generating a coated fabric. After drying, the weight of the coated fabric was measured again.

A control sample was also prepared by dipping a pre-weighed cotton woven fabric (Whaley's, cotton scrim) directly into the gelatin solution without pre-treatment in the saturated sodium sulfate solution. An increase in fabric weight of 250% was obtained for the control sample, while an increase in fabric weight of 400% was obtained for samples pre-treated with the saturated sodium sulfate solution.

### Example 13

A diluted polyurethane solution was prepared by mixing 20 g SANCURE^{™} 20025 original stock emulsion with 80 mL de-ionized water. A pre-weighed polyester nonwoven fabric (Needlepunched, 1 mm thickness, The Felt Company) was dipped into the diluted polyurethane solution with slight stirring for 5 minutes. The soaked fabric was then taken out from the diluted polyurethane solution and excess liquid was removed. The treated fabric was dried in an oven at 65 °C for 4 hours, until completely dry, generating a polyurethane pre-loaded fabric.

A gelatin solution was made by dissolving 10 g of gelatin (animal extract, Sigma Aldrich) into 100 mL de-ionized water and stirred at 500 rpm for 1 hour at 50°C. The polyurethane pre-load fabric was dipped into the gelatin solution with slight stirring for 1 minute. The fabric was then taken out from the gelatin solution. After removing excess liquid, the fabric was dried in an oven at 65 °C overnight, generating a coated fabric. After drying, the weight of the coated fabric was measured again.

A control sample was prepared by dipping a pre-weighed polyester nonwoven fabric (Needlepunched, 1 mm thickness, The Felt Company) directly into the gelatin solution without pretreatment in the diluted polyurethane solution. An increase in fabric weight of 150% was obtained for the control sample, while an increase in fabric weight of 200% was obtained for samples pre-treated with the diluted polyurethane solution.

### Example 14

A collagen solution was made by dissolving 5 g of Type I bovine collagen in 100 mL de-ionized water with 0.01 N HCl (hydrochloric acid) at room temperature with vigorous stirring for 8 hours. After a homogenous collagen solution was formed, 11 mL of 10x PBS (phosphate-buffered saline) stock solution was added, and the solution's pH was adjusted to 7.2 by adding sodium hydroxide. The solution was stirred at 30 °C for six hours.

A silk yarn was dipped into the coating solution prepared above for at least 10 seconds. After removing excess liquid, the collagen solution-soaked yarn was then transferred in pure CARBITOL (di(ethylene glycol) ethyl ether) for coagulation for at least 30 seconds. The CARBITOL coagulated yarn was then transferred into acetone for at least 30 seconds to remove CARBITOL. The processed yarn was then dried at room temperature with high flow speed air. The collagen uptake, compared to original non-coated yarns, was about 10% to about 50%, in weight percent.

### Example 15

A collagen solution was made by dispersing 1 g of Type I bovine collagen in 100 mL 0.01 N hydrochloric acid and stirred at 500 rpm for 2 hours at 23 °C. The collagen was then cooled to 4 °C, and 11 mL of 10X phosphate buffer saline, which was adjusted to pH 11.2 using 1 N sodium hydroxide, was added to the cold mixture, resulting in a collagen solution at conditions for fibrillation, pH 7-7.5 and conductivity of 10-20 mS/cm. A pre-weighed silk yarn was dipped into the cold collagen solution with slight stirring for 5 minutes. The soaked yarn was then taken out from the cold collagen solution and excess liquid was removed. The soaked yarn was then placed directly into a 35 °C bath of diethylene glycol monobutyl ether (CARBITOL) with slight stirring for 1 minute. The yarn was then dried in a 50 °C oven for four hours. The collagen uptake, compared to original non-coated yarns, was about 10% to about 50%, in weight percent.

While various embodiments have been described herein, they have been presented by way of example, and not limitation. It should be apparent that adaptations and modifications are intended to be within the meaning and range of equivalents of the disclosed embodiments, based on the teaching and guidance presented herein. It therefore will be apparent to one skilled in the art that various changes in form and detail can be made to the embodiments disclosed herein without departing from the spirit and scope of the present disclosure. The elements of the embodiments presented herein are not necessarily mutually exclusive, but can be interchanged to meet various situations as would be appreciated by one of skill in the art.

Embodiments of the present disclosure are described in detail herein with reference to embodiments thereof as illustrated in the accompanying drawings, in which like reference numerals are used to indicate identical or functionally similar elements. References to "one embodiment," "an embodiment," "some embodiments," "in certain embodiments," etc., indicate that the embodiment described can include a particular feature, structure, or characteristic, but every embodiment can not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

The examples are illustrative, but not limiting, of the present disclosure.

### SEQUENCES

## Claims

1. A protein-coated material comprising:
a substrate, wherein the substrate is selected from the group consisting of a textile, a sheet, a rope, a fiber, a yarn, a strand, and combinations thereof;
a salt coating disposed over the substrate, wherein the salt is sodium sulfate; and
a protein coating disposed over the salt coating, wherein the protein is gelatin.

2. The material of claim 1, wherein the salt coating is a dried saturated salt solution.

3. The material of claim 1 or 2, wherein the salt coating is disposed on the substrate.

4. The material of any of claims 1-3, wherein the protein coating is disposed on the salt coating.

5. The material of any of claims 1-4, wherein the protein is a recombinant protein.

6. The material of any of claims 1-5, wherein the substrate is a yarn comprising two or more strands twisted together.

7. A method for making a protein-coated material, the method comprising:
coating a substrate with a saturated salt solution to form a salt-coated substrate, wherein the substrate is selected from the group consisting of a textile, a sheet, a rope, a fiber, a yarn, a thread, and combinations thereof, and wherein the salt solution is a sodium sulfate solution;
drying the salt-coated substrate to form a dried salt-coated substrate;
coating the dried salt-coated substrate with a protein solution comprising a protein to form a protein solution-coated substrate, wherein the protein is gelatin; and
drying the protein solution-coated substrate to form the protein-coated material.

## Patentansprüche

1. Proteinbeschichtetes Material, umfassend:
ein Substrat, wobei das Substrat ausgewählt ist aus der Gruppe bestehend aus: einem Textil, einem Flachmaterial, einem Seil, einer Faser, einem Garn, einem Strang und Kombinationen davon;
eine Salzbeschichtung, die über dem Substrat angeordnet ist, wobei das Salz Natriumsulfat ist; und
eine Proteinbeschichtung, die über der Salzbeschichtung angeordnet ist, wobei das Protein Gelatine ist.

2. Material nach Anspruch 1, wobei die Salzbeschichtung eine getrocknete gesättigte Salzlösung ist.

3. Material nach Anspruch 1 oder 2, wobei die Salzbeschichtung auf dem Substrat angeordnet ist.

4. Material nach einem der Ansprüche 1-3, wobei die Proteinbeschichtung auf der Salzbeschichtung angeordnet ist.

5. Material nach einem der Ansprüche 1-4, wobei das Protein ein rekombinantes Protein ist.

6. Material nach einem der Ansprüche 1-5, wobei das Substrat ein Garn ist, das zwei oder mehr miteinander verdrillte Stränge umfasst.

7. Verfahren zur Herstellung eines proteinbeschichteten Materials, wobei das Verfahren umfasst:
Beschichten eines Substrats mit einer gesättigten Salzlösung, um ein salzbeschichtetes Substrat zu bilden, wobei das Substrat ausgewählt ist aus der Gruppe bestehend aus einem Textil, einem Flachmaterial, einem Seil, einer Faser, einem Garn, einem Faden und Kombinationen davon, und wobei die Salzlösung eine Natriumsulfatlösung ist;
Trocknen des salzbeschichteten Substrats, um ein getrocknetes, salzbeschichtetes Substrat zu bilden;
Beschichten des getrockneten, salzbeschichteten Substrats mit einer Proteinlösung, die ein Protein umfasst, um ein mit einer Proteinlösung beschichtetes Substrat zu bilden, wobei das Protein Gelatine ist; und
Trocknen des mit der Proteinlösung beschichteten Substrats, um das proteinbeschichtete Material zu bilden.

## Revendications

1. Matériau revêtu de protéine comprenant :
un substrat, le substrat étant choisi dans le groupe constitué d'un textile, d'une feuille, d'une corde, d'une fibre, d'un filé, d'une corde et de combinaisons de ceux-ci ;
un revêtement de sel disposé au-dessus du substrat, le sel étant du sulfate de sodium ; et
un revêtement de protéine disposé au-dessus du revêtement de sel, la protéine étant de la gélatine.

2. Matériau selon la revendication 1, dans lequel le revêtement de sel est une solution saline saturée séchée.

3. Matériau selon la revendication 1 ou 2, dans lequel le revêtement de sel est disposé sur le substrat.

4. Matériau selon une quelconque des revendications 1 à 3, dans lequel le revêtement de protéine est disposé sur le revêtement de sel.

5. Matériau selon une quelconque des revendications 1 à 4, dans lequel la protéine est une protéine recombinante.

6. Matériau selon une quelconque des revendications 1 à 5, dans lequel le substrat est un fil comprenant deux ou plusieurs brins torsadés ensemble.

7. Procédé destiné à fabriquer un matériau revêtu de protéine, le procédé comprenant :
revêtir un substrat avec une solution saline saturée pour former un substrat revêtu de sel, le substrat étant choisi dans le groupe constitué d'un textile, d'une feuille, d'une corde, d'une fibre, d'un filé, d'un fil et de combinaisons de ceux-ci, et dans lequel la solution saline est une solution de sulfate de sodium ;
sécher le substrat revêtu de sel pour former un substrat revêtu de sel séché ;
revêtir le substrat revêtu de sel séché avec une solution de protéine comprenant une protéine pour former un substrat revêtu de solution de protéine, la protéine étant de la gélatine ; et
sécher le substrat revêtu de solution de protéine pour former le matériau revêtu de protéine.
